Europäisches Patentamt

European Patent Office

Office européen des brevets

(19)

(11) Publication number: **0 049 964**
A2

(12) **EUROPEAN PATENT APPLICATION**

(21) Application number: **81304392.4**

(22) Date of filing: **23.09.81**

(51) Int. Cl.³: **B 64 C 25/32**
**B 64 C 25/66**

(30) Priority: **13.10.80 GB 8032975**

(43) Date of publication of application:
**21.04.82 Bulletin 82/16**

(84) Designated Contracting States:
**AT BE CH DE FR GB IT LI NL SE**

(71) Applicant: **WESTLAND AIRCRAFT LIMITED**

**Yeovil Somerset(GB)**

(72) Inventor: **Deady, Martin Albert**
**Westmoor View Owl Street East Lambrook**
**South Petherton Somerset(GB)**

(74) Representative: **Jack, Bruce James et al,**
**FORRESTER & BOEHMERT Widenmayerstrasse 4/1**
**D-8000 Munchen 22(DE)**

(54) **Ground engaging members.**

(57) A ground engaging member comprises a circular pad, preferably a pneumatic pad, adapted to be supported from a vehicle so as to present a circular surface towards the ground, the pad being tilted so that the circular surface is angled with respect to the ground whereby a lateral portion of the circumferential region of the pad contacts the ground surface to support a vehicle on which the member is fitted for motion over the ground.

In one embodiment, moving means is incorporated to selectively move the pad between the tilted position and a horizontal position which provides an automatic braking facility. Steering can be incorporated by selectively varying the radial plane of the tilt angle of the pad.

The invention is described with reference to its use as a ground engaging member for a helicopter undercarriage; however, it can be used on any vehicle and has particular application on vehicles required to move in any direction and in a confined space.

FIG.3

Description of Invention

Title: "Ground Engaging Members"

THIS INVENTION relates to ground engaging members for use on vehicles, and particularly to such members for use as an undercarriage for an aircraft or a helicopter.

Conventionally, helicopter undercarriages have ground engaging members comprising either a plurality of wheels or skids.

Wheeled undercarriages are utilised mainly for helicopters designed to operate from hard standings and from the deck of a ship. The wheels provide for mobility on such a surface to aid ground handling; however, an unplanned landing on soft ground can cause problems due to wheel sinkage. Furthermore, the size of wheel required to provide the necessary ground contact area results in a large frontal area causing high drag loads during operation, and its diameter is a significant factor in establishing the vertical attachment location of a main suspension unit (normally an oleo pneumatic strut). Proposals have been made for retracting such a wheeled undercarriage, but the size of the wheels is a consideration in that it reduces the area of the fuselage available for payload. This can be overcome by retracting into faired sponsons, but the size of wheel normally involved results in an undesirably large fairing being required.

For operation from a ship's deck it is also necessary to provide a braking system for arresting movement of the helicopter. This complicates the design of undercarriage unit, increases its weight and requires the provision of a power supply (e.g. electric or hydraulic) at the wheel hub.

Skid undercarriages are usually employed for helicopters designed to operate from unprepared and uneven surfaces. However, specialised ground equipment is required to move a skid-equipped helicopter once it has landed and this equipment may not be available in remote areas. Also, the condition of the ground surface dictates manoeuvrability on the ground even if such equipment is available.

Another type of helicopter undercarriage is disclosed in U.K.

Patent Specification GB-A-993847, and consists of a landing wheel that can be turned over on to its side to act, specifically, as a suction pad. The wheel has two positions, upright and horizontal, and functions conventionally in the upright position.

U.S. Patent Specification US-A-2,488,310 describes a watercraft provided with annular rotatable floats adapted to provide both buoyancy and propulsion, and U.S. Patent Specification US-A-3,168,155 describes a vehicle provided with circular air cushion support members which are rotated so as to form an air curtain which retains a supporting air cushion. This latter specification describes an embodiment in which the support members are proposed for use as an aircraft landing gear and, for this purpose, tilting of the support members is proposed in order to ensure that any incidental contact with the ground during forward motion will assist the rotation that is required for generation of the air cushion lift.

In one aspect, the invention provides a ground engaging member comprising a circular pad adapted to be supported from a vehicle so as to present a circular surface towards the ground, characterised in that the pad is rotatable about its axis and tilted so that the circular surface is angled with respect to the ground whereby a lateral portion of the circumferential region of the pad contacts the ground surface to support a vehicle on which the member is fitted for motion over the ground.

In another aspect, the invention provides a ground engaging member for supporting a vehicle on a surface and including a circular pad supported from the vehicle so as to present a circular surface towards the ground, characterised in that the pad is rotatable about its axis and tilted so that the circular surface is angled with respect to the ground whereby a lateral portion of a circumferential region of the pad contacts the ground to support the vehicle for motion over the ground.

Preferably, the circumferential region is radiussed.

The ground engaging member may include moving means adapted to selectively move the pad between its said tilted position and a horizontal position in which the circular surface is substantially parallel to the ground supporting surface.

The pad may include a hub rotatable on an axle, the moving means being operatively associated with the axle.

In a first embodiment, the axle may be attached to a supporting structure by a generally horizontal pivot, the moving means comprising a hydraulic jack connected between the supporting structure and the axle. Conveniently, steering means may be provided and adapted to selectively vary the radial plane of the tilt angle of the pad in order to provide a steering facility for a vehicle on which the ground engaging member is fitted and, in this embodiment, the steering means may comprise a hydraulic jack connected between supporting structure and the ground engaging member so as to rotate the member about a generally vertical axis.

In a further embodiment, the pad may be attached to a supporting structure through a universal joint, the tilting means comprising a swash plate mechanism adapted to both move the pad between horizontal and tilted positions and to selectively vary the radial plane of the angle of tilt so as to provide a steering facility. Conveniently, said swash plate mechanism may comprise a rotatable ring attached to the hub and interconnected to supporting structure by two generally vertical hydraulic jacks and a fixed length link equi-spaced around the generally vertical axis.

In a yet further embodiment, the axle may be an angled axle having one end rotatably mounted in the hub of the pad and its other end rotatably mounted in an angled aperture in supporting structure. The moving means may comprise a hydraulic jack attached between supporting structure and a lever fixedly attached to an upper end of the axle and adapted to rotate the axle thereby to tilt the pad and to vary the radial plane of the angle of tilt. The axle angle and the angle of the aperture in the supporting structure may be approximately 15 degrees from a generally vertical axis.

The pad may comprise a metal disc supported from the hub by a plurality of radially extending flexure arms. Conveniently, the lower, ground engaging, surface of the disc has a rubber coating incorporating a tread pattern.

Preferably, however, the pad comprises a pneumatic assembly including an inflatable tyre having a generally elliptical cross-sectional shape, the tyre having a continuous lower surface and an apertured upper surface sealingly attached to the hub.

Power means may be incorporated and adapted to rotate the pad when in its tilted position so as to provide a self-powered facility to a vehicle on which the ground engaging member is fitted.

In yet another aspect, the invention provides a ground engaging member comprising a circular pad rotatable about its axis, and characterised by moving means adapted to move the pad between a generally horizontal position in which its lower surface is substantially parallel to the ground thereby tending to prevent movement of a vehicle on which said member is fitted and a tilted position in which the lower surface of the pad is angled relative the ground surface whereby movement of a vehicle on which the member is fitted is permitted by rolling of the pad about its axis around a circumferential region thereof.

In a further aspect, the invention provides a helicopter characterised by an undercarriage comprising a plurality of ground engaging members each including a circular pad rotatable about its axis and moving means adapted to move the pad between a generally horizontal position in which a lower surface of the pad is parallel to the ground surface thereby tending to prevent movement of the helicopter when the helicopter is resting on the undercarriage and a tilted position in which the lower surface is angled relative the ground surface whereby movement of the helicopter is permitted by rolling of the pads about their axes and around a circumferential region thereof.

Preferably, at least one of the ground engaging members includes steering means comprising means adapted to selectively vary the radial plane of the angle of tilt of the respective pad.

The invention will now be described by way of example only and with reference to the accompanying drawings in which:

Figure 1 is a fragmentary side elevation of a helicopter having a tricycle undercarriage incorporating ground engaging members constructed in accordance with the invention;

Figure 2 is a side elevation of a ground engaging member constructed in accordance with one embodiment of the invention, showing the member in a horizontal position;

Figure 3 is a side elevation similar to Figure 2 but showing the ground engaging member in a tilted position;

Figure 4 is an elevation taken in the direction of arrow A of Figure 3 to illustrate a comparison between the ground engaging member of Figure 2 and a conventional wheeled undercarriage;

Figure 5 is a side elevation of a ground engaging member constructed in accordance with a further embodiment of the invention and illustrating a preferred construction of pad;

Figure 6 is a side elevation of a ground engaging member constructed in accordance with a yet further embodiment of the invention;

Figure 7 is a side elevation taken in the direction of arrow B of Figure 6; and

Figure 8 is a fragmentary part-sectioned illustration showing details of construction of part of the ground engaging member illustrated in the embodiment of Figures 5, 6 and 7.

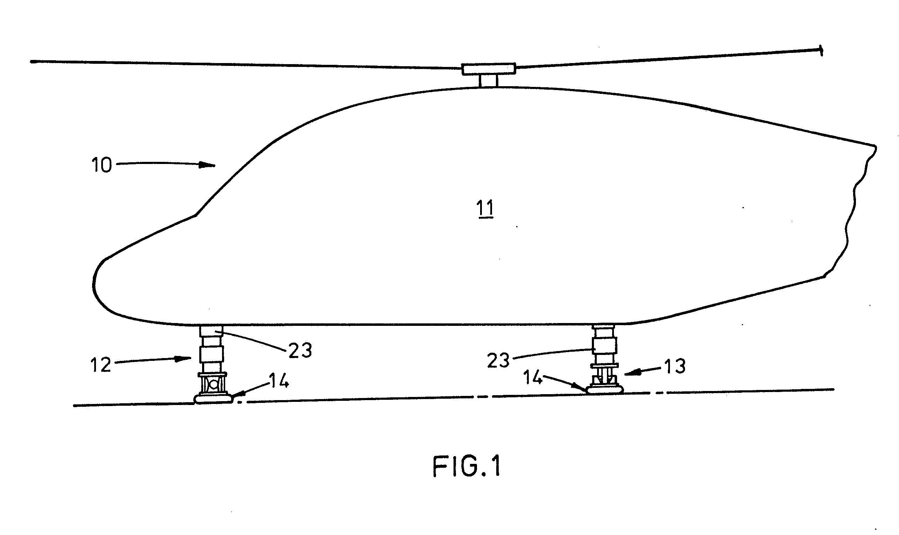

Figure 1 illustrates a helicopter 10 having a fuselage 11 provided with a tricycle undercarriage constructed in accordance with one embodiment of the invention. The undercarriage comprises a nose unit 12 and two lateral main units 13 located one at each side of the horizontal centreline of the fuselage 11. Each of the main and nose units 12 and 13 includes a ground engaging member 14 supported at the lower end of an oleo pneumatic strut 23. The nose unit 12 incorporates a steering facility to aid ground handling.

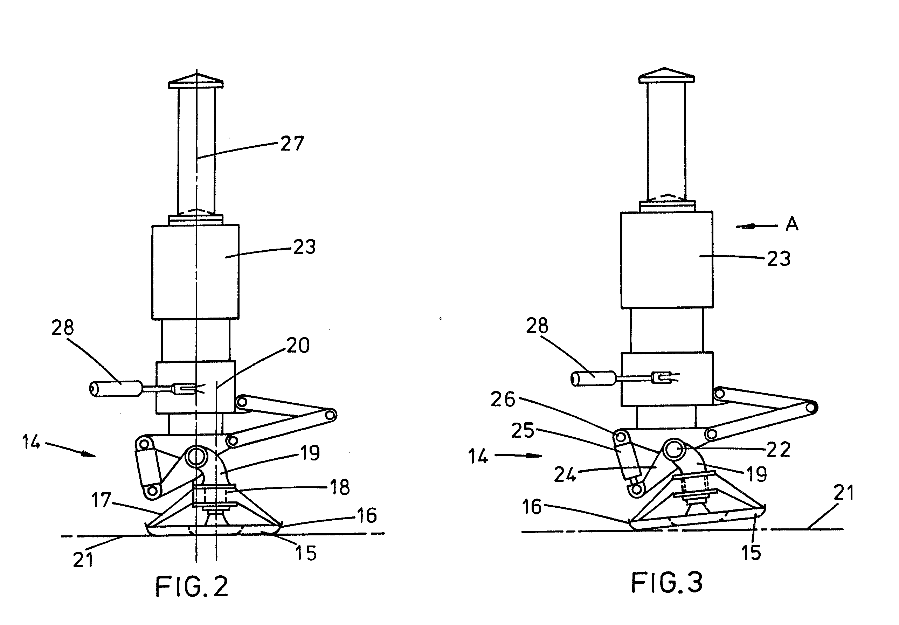

Figures 2 to 8 illustrate detail features of the construction and operation of various embodiments of ground engaging member 14 constructed in accordance with the invention.

Thus, in the embodiment illustrated in Figure 2, the ground engaging member 14 comprises a circular metal pad 15 having a circular generally flat lower surface and an upturned radiussed rim portion 16. The surface of the pad 15 is provided with a coating of rubber (not shown) that, preferably, incorporates a tread pattern. The pad 15 is supported by a plurality of metallic flexure arms 17 extending radially outwardly and downwardly from a hub 18 arranged for rotation on an axle 19 about an axis 20.

With the member 14 in the position shown in Figure 2, i.e. with the lower circular surface of metal pad 15 parallel to a supporting surface 21, it will be noted that the axis 20 is vertical; however, it is a feature of the illustrated embodiment that the member 14 is moveable from the position illustrated in Figure 2 to a tilted position illustrated in Figure 3 in which the lower surface of the pad is angled with respect to the surface 21 so that a lateral portion of a circumferential region of pad 15 is in contact with ground surface 21.

This is achieved, in the embodiment of Figures 2 and 3, by a horizontal pivot 22 serving to attach an end of axle 19 to the lower end of the oleo pneumatic strut 23. One end of an extension arm 24 is also mounted on pivot 22 and is fixedly attached to the axle 19, and a hydraulic jack 25 is attached between the other end of arm 24 and a fixed attachment 26 at the bottom of the strut 23. Thus, extension and retraction of the jack 25 serves to move the member 14 between the generally horizontal position of Figure 2 and the tilted position of Figure 3, the angle of tilt being limited to an angle of between 10 and 15 degrees. The jack 25 includes locking means (not shown) operative to lock the jack in its extended position, i.e. with the pad 15 in its tilted position as shown in Figure 3.

It will be noted that axis 20 is offset laterally from the vertical axis 27 of the oleo strut 23.

In, for example, a tricycle undercarriage, it is desirable to incorporate a steering system at least on the nose unit to facilitate ground manoeuvring, and this is achieved in the embodiment of Figures 2 and 3 by connecting a hydraulic steering jack 28 between structure of the helicopter and a lower body section of strut 23. Actuation of jack 28 serves to rotate the lower section of strut 23 and therefore the attached member 14 about the vertical axis 27 of strut 23.

For main undercarriage units, the horizontal axis 22 is fixed so as to be parallel to the longitudinal axis of the fuselage 11 (Figure 1) so that tilting of axis 20, and consequently pad 15, is restrained to be in a lateral plane perpendicular to the longitudinal axis of the fuselage 11.

In the case of the steerable facility, provided by the steering jack 28 in the embodiment of Figure 2, the pad 15 as well as being tiltable by operation of jack 25, is rotatable about the vertical axis 27 of strut 23 by operation of steering jack 28 so as to change the radial plane of the tilt angle of the pad, i.e. the plane radial to the vertical axis 27 in which the angle of tilt of the pad has a maximum value, whilst it is possible to arrange for rotational movement of the radial plane of tilt of pad 15 to encompass 360 degrees, in practice, especially in the embodiment of Figure 2, it will be convenient to limit such rotation so that the radial plane of tilt of the pad may be positioned within an arc of say 90 degrees on either side of the longitudinal centreline of the fuselage.

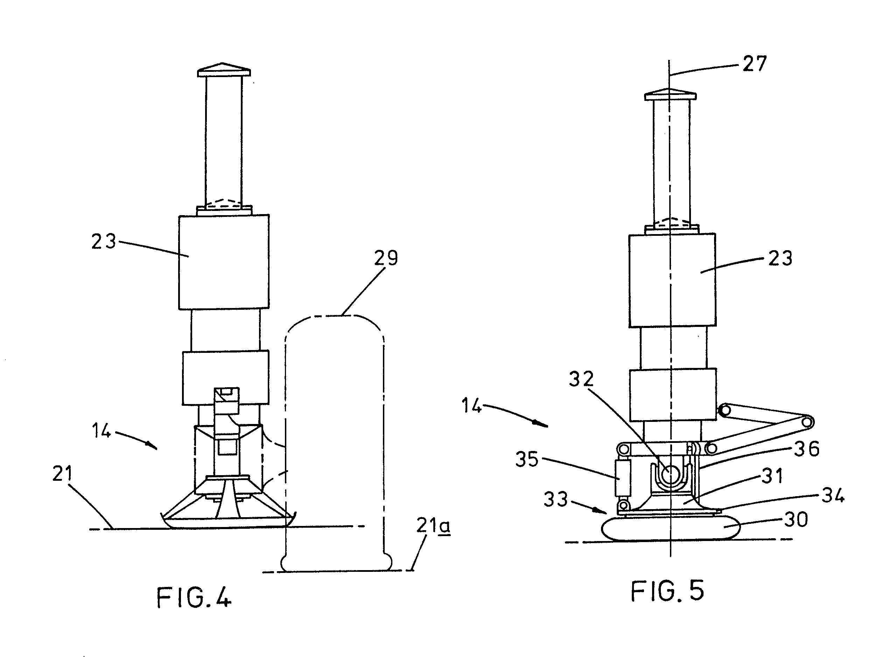

Figure 4 is a further view of the embodiment of Figures 2 and 3 and includes, in ghosted outline 29, a conventional wheel and axle assembly that would be required in order to provide a similar ground contact area to that provided by the ground engaging member 14 of this invention. This clearly illustrates the reduction in frontal area achieved by use of the member 14, as well as the reduction in overall height, as compared to the wheeled assembly, by a comparison of the respective ground lines 21 and 21a.

The embodiment of Figure 5 includes a preferred construction of ground engaging member 14, and an alternative combined tilting and steering mechanism.

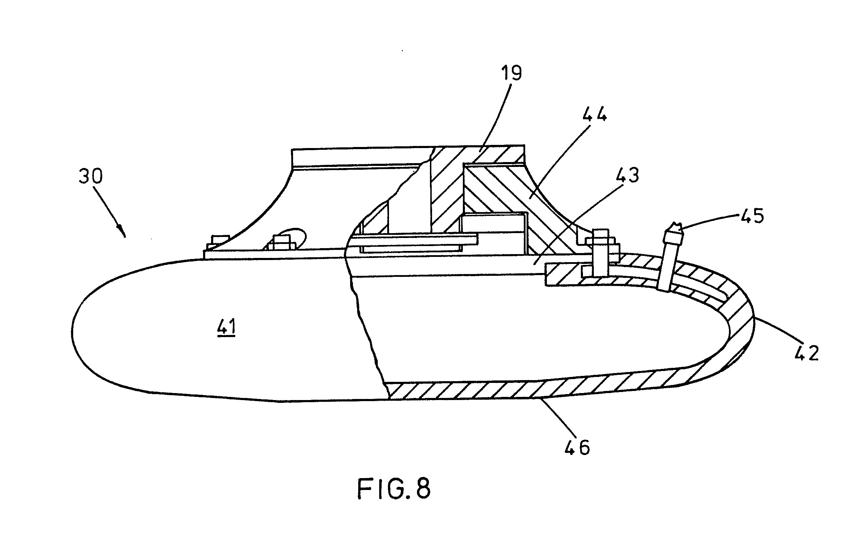

Thus, in that embodiment, the member 14 comprises a pneumatic inflatable circular pad 30 including a rubber tyre-like element of generally elliptical cross-sectional shape having a lower continuous side wall forming the circular ground engaging surface and an upper side wall having a central aperture attached to a hub 31. Further details of the tyre and hub construction will hereinafter be described in more detail with reference to Figure 8.

Reverting now to the embodiment of Figure 5, the hub 31 is attached to a lower end of the oleo strut 23 through a universal joint 32 having its centre located on the vertical axis 27, and a swash plate mechanism generally indicated at 33 is incorporated to provide for tilting of the member 14.

The swash plate mechanism 33 includes a ring 34 rotatably mounted on the hub 31. Two hydraulic jacks 35 (one only being shown in Figure 5) and a fixed length link 36 extend generally vertically between attachments at the lower end of strut 23 and the ring 34, and are spaced-apart at 120 degrees intervals therearound.

Thus, it will be apparent that respective controlled extension and retraction of the two jacks 35 serves to move the member 14 about universal joint 32 through a limited angle and in any selected radial direction with respect to the vertical axis 27, thereby providing a combined tilting and steering facility that is especially suited for the steerable unit(s) required in an overall undercarriage assembly. In a non-illustrated modification for a non-steerable unit, one jack 35 only is required and is located diametrically opposite the fixed length link 36 and so as to lie in a plane perpendicular to the longitudinal axis of the fuselage to provide for limited tilting of the member 14 in either direction within the lateral plane only. Clearly, in such a modification, the universal joint can be replaced by a simple horizontal pivotal attachment similar to that previously described with reference to the embodiment of Figure 2.

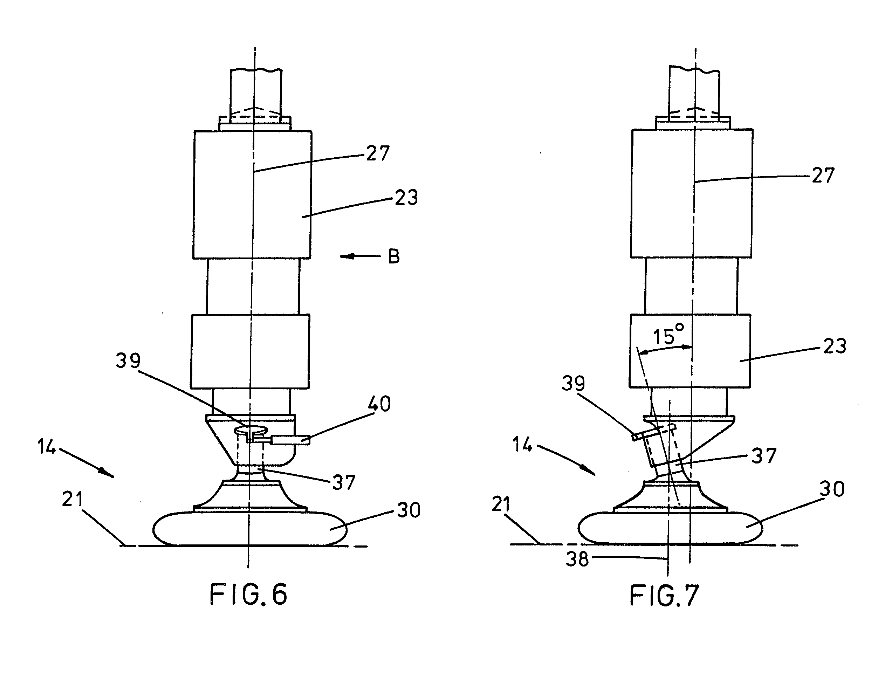

Figures 6 and 7 illustrate a yet further embodiment of undercarriage unit constructed in accordance with this invention. Thus, the ground engaging member 14 which comprises a pneumatic pad 30 having a rubber tyre similar to that previously described is rotatably supported at the lower end of an axle 37 which extends upwardly at an angle of approximately 15 degrees from the vertical centreline 38 of the pad 30 when the pad 30 is positioned with its lower circular surface parallel to the ground supporting surface 21. The axle 37 is rotatably mounted in an aperture in a housing at the lower end of strut 23, the aperture being arranged at an angle of 15 degrees from the vertical axis 27 of the strut 23, and an operating lever 39 is fixedly secured to the upper end of the axle 37. A hydraulic jack 40 (Figure 6) is attached between the lever 39 and the housing of strut 23, the jack body being attached to the housing so as to be capable of pivotal movement in a vertical plane, for a purpose to be hereinafter described.

In operation, extension and retraction of the jack 40 will rotate the angled axle 37 in the correspondingly angled aperture in the strut 23, which rotation serves to move the pad 15 relative the ground engaging surface 21 through a tilt angle which varies depending on the amount of jack movement applied. It will be apparent that the amount of jack movement also serves to vary the radial plane in which such tilting of pad 15 occurs so that a single jack 40 provides both mobility (due to tilt) and steering (due to varying the radial plane of such tilt). It will also be noted that, in this embodiment, the jack 40 is positioned so as to be isolated from landing loads.

Figure 8 illustrates in more detail a ground engaging member 14 in the form of a pneumatic circular pad 30 as used in the embodiments described with reference to Figures 5 to 7. As shown, a circular rubber tyre 41 has a generally elliptical cross-sectional shape in an unloaded condition and has a radiussed periphery 42. A continuous, slightly convex bottom wall 46 provides a ground engaging surface and an aperture is provided in the upper wall. The edge of the tyre around the aperture is sealed and bolted to a circular metal pressure plate 43 and a hub assembly 44 which is rotatably attached to a lower end of axle 19. The tyre is inflated through a valve 45.

In the tricycle undercarriage configuration illustrated in Figure 1, the two laterally spaced main units 13 have ground engaging members 14 arranged for pivotal movement in either lateral plane only, i.e. about a horizontal axis that is parallel to the longitudinal centreline of the fuselage 11, and may be constructed in accordance with the embodiment illustrated in Figures 2 and 3 with the steering jack 28 omitted, or in accordance with the embodiment of Figure 5 in the form having one servo jack 35 diametrically opposite one fixed length link 36.

The steerable nose unit 12 may be constructed in accordance with the embodiment of Figures 2 and 3 which facilitates tilting of the ground engaging member 14 in a plane within a limited arc equi-spaced on either side of the longitudinal centreline of the fuselage 11, or in accordance with the embodiment of Figure 5 which permits tilting of the ground engaging member in any radial plane.

Alternatively, of course, the main units 13 may also incorporate a steering facility to further increase manoeuvrability, and the main and/or nose units may be constructed in accordance with the embodiment hereinbefore described with reference to Figures 6 and 7.

Preferably, both the nose unit 12 and the two main units 13 are fitted with ground engaging members 14 of the pneumatic construction previously described with reference to Figures 5, 6, 7 and 8.

A vertical landing will normally be accomplished with the ground engaging members 14 in the horizontal position, i.e. with their lower surfaces parallel to a supporting ground surface. On contact with the surface the friction between the lower surfaces of the members 14 and the ground surface 21 tends to prevent movement of the helicopter thereby providing automatic braking which prevents side-slip. This is especially important in retaining the helicopter for example on a moving deck.

When it is desired to move the helicopter on the ground, the ground engaging members 14 are moved to the tilted position illustrated in Figure 3 in which the lower circular surfaces of the pads 15 make an angle with the supporting surface so that a lateral portion only of the circumferential region contacts the surface. In that condition, the helicopter can be moved by rolling of the pads 15 around their axes to provide ground mobility either by towing or by any of the specialised ground handling apparatus presently available. Steering is accomplished by suitably adjusting the radial plane of tilt of the member 14 on the nose unit 12 as hereinbefore described so that full manoeuvrability is achieved.

Clearly, any problems encountered during such manoeuvring can be averted by moving the members 14 back to their horizontal position to provide immediate and effective braking whilst suitable corrective action is taken. Thus, one of the important features of the present invention is the built-in braking facility which dispenses with the requirement for the complex systems normally required in conventional wheeled undercarriage systems.

Other advantages will be evident from a viewing of Figure 4 which illustrates the reduction in area achieved by the construction of the present invention when compared with a conventional wheeled system. Operationally, in respect of a non-retractable design, the reduction in frontal area results in significantly reduced drag loads during flight.

Physically, the minimised size of the unit of the present invention will require either less fuselage space in which to retract or, if retracted into fairings, a significant reduction in the fairing size.

The saving in height of the unit illustrated by the vertical dimension between lines 21 and 21a in Figure 4 can also be usefully employed either to enable a corresponding increase in the height of the fuselage without an overall increase in the height of the helicopter 10, or for the incorporation of energy absorbing means to absorb landing loads that will normally require an increase in overall height.

It will also be noted that the pneumatic construction of the pads 30 of the embodiments of Figures 5, 6 and 7 serves to absorb at least a proportion of such landing loads. A similar facility can be provided with the metallic pads 15 of the embodiment of Figures 1 and 2 by constructing the pads 15 so that they collapse flat when in the horizontal position due to the effect of landing loads, yet have sufficient strength to support the weight of the helicopter on the radiussed rim portion 16 when in the tilted position.

An undercarriage constructed in accordance with the invention can also be used with advantage on helicopters designed to operate from unprepared surfaces in place of conventional skids, especially when the previously described pneumatic ground engaging member is utilised. Thus, the flotation effect provided by the inflated pads 30 combined with their rolling capability when tilted, provides for manoeuvrability in ground conditions that would be impossible with a skid undercarriage, due to sinkage. Furthermore, of course, potential mobility is provided in any remote area in which the specialised ground handling apparatus normally required for helicopters with skid undercarriages may not be available.

Whilst several embodiments have been described and illustrated it will be apparent that many modifications can be made without departing from the scope of the invention as defined in the appended claims. For example, power means such as a hydraulic motor may be incorporated to rotate the ground engaging members 14 so as to provide a self-powered facility for ground manoeuvring. Conveniently, in such an arrangement, the lower ground engaging surface of members 14 will be provided with a tread pattern designed to ensure maximum traction in soft ground so as to extend the operational capabilities. The tilt angle of the pad is not limited to the angles herein specified in respect of the various described embodiments and, furthermore, may be selectively variable to provide optimum mobility dependant on the conditions of the ground over which the vehicle is required to operate. Although described and illustrated in relation to a helicopter undercarriage, it will be understood that the ground engaging member of this invention can be used on other vehicles, particularly vehicles required to move in any direction and in a confined space. Also, any desired number of the ground engaging members can be used on a particular vehicle; for example, in the described helicopter application, four such members could form the undercarriage with either the front or the rear pair or all four members incorporating the steering facility hereinbefore described.

CLAIMS

1. A ground engaging member (14) comprising a circular pad (15, 30) adapted to be supported from a vehicle so as to present a circular surface towards the ground (21) characterised in that the pad is rotatable about its axis and tilted so that the circular surface is angled with respect to the ground whereby a lateral portion of the circumferential region (16, 42) of the pad contacts the ground surface to support a vehicle on which the member is fitted for motion over the ground.

2. A ground engaging member (14) for supporting a vehicle on a surface (21) and including a circular pad (15, 30) supported from the vehicle so as to present a circular surface towards the ground characterised in that the pad is rotatable about its axis and tilted so that the circular surface is angled with respect to the ground whereby a lateral portion of the circumferential region of the pad contacts the ground to support the vehicle for motion over the ground.

3. A member as claimed in Claim 1 or Claim 2, further characterised in that the circumferential region (16, 42) is radiussed.

4. A member as claimed in any preceding Claim, further characterised in that the member includes moving means (25, 33, 37) adapted to selectively move the pad between its said tilted position and a horizontal position in which the circular surface is substantially parallel to the ground surface.

5. A member as claimed in Claim 4, further characterised in that the pad (15, 30) includes a hub (18, 44) rotatable on an axle (19, 37) said moving means being operatively associated with said axle.

6. A member as claimed in Claim 5, further characterised in that said axle (19) is attached to a supporting structure (23) by a generally horizontal pivot, said moving means comprising a hydraulic jack (25) connected between the structure and the axle (19).

7. A member as claimed in any one of Claims 4 to 6, further characterised in that steering means are provided and adapted to selectively vary a radial plane of the tilt angle of the pad (15, 30).

8. A member as claimed in Claim 7, further characterised in that said steering means comprises a hydraulic jack (28) connected between supporting structure and the member (14) and adapted to rotate the member about a generally vertical axis.

9. A member as claimed in any one of Claims 1 to 4, further characterised in that said pad is attached to supporting structure through a universal joint (32) and includes a swash plate (33) comprising a rotatable ring (34) attached to a hub (31) and interconnected to supporting structure by two generally vertical hydraulic jacks (35) and a fixed length link (36) equi-spaced around a generally vertical axis (27).

10. A member as claimed in Claim 5, further characterised in that said axle (37) is an angled axle having one end rotatably mounted in the hub (44) of said pad and its other end rotatably mounted in an angled aperture in supporting structure (23), said moving means being adapted to rotate said upper end of the axle in said angled aperture.

11. A member as claimed in Claim 10, further characterised in that said moving means comprise a hydraulic jack (40) attached between supporting structure and a lever (39) fixedly attached to an upper end of said axle.

12. A member as claimed in Claim 10 or Claim 11, further characterised in that said axle angle and the angle of the aperture in the supporting structure from a generally vertical axis are approximately 15 degrees.

13. A member as claimed in Claim 1 or Claim 2, further characterised in that said pad comprises a metal disc (15) supported from a hub (18) by a plurality of radially extending flexure arms (17).

14. A member as claimed in Claim 13, further characterised in that a lower surface of said metal disc is provided with a rubber coating incorporating a tread pattern.

15. A member as claimed in Claim 1 or Claim 2, further characterised in that said pad comprises a pneumatic assembly (30) including an inflatable tyre (41) having a generally elliptical cross-sectional shape, said tyre having a continuous lower surface (46) and an apertured upper surface sealingly attached to said hub.

16. A member as claimed in any preceding Claim, further characterised in that power means are incorporated to rotate the pad when in its tilted position.

17. A ground engaging member (14) comprising a circular pad (15, 30) rotatable about its axis (20, 27, 58) characterised by moving means (25, 33, 37) adapted to move the pad between a generally horizontal position in which its lower surface is parallel to the ground (21) thereby tending to prevent movement of a vehicle on which said member is fitted and a tilted position in which the lower surface of the pad is angled relative the ground surface whereby movement of a vehicle on which the member is fitted is permitted by rolling of the pad about its axis around a circumferential region (16, 42) thereof.

18. A vehicle characterised by a plurality of ground engaging members constructed in accordance with any one of the preceding Claims.

19. A helicopter (11), characterised by an undercarriage (12, 13) comprising a plurality of ground engaging members (14) each including a circular pad (15, 30) rotatable about its axis, and moving means (25, 33, 40) adapted to move the pad between a generally horizontal position in which the lower surface of the pad is parallel to the ground surface thereby tending to prevent movement of the helicopter when the helicopter is resting on the undercarriage, and a tilted position in which the lower surface is angled relative the ground surface whereby movement of the helicopter is permitted by rolling of the pads about their axes and around a circumferential region thereof.

20. A helicopter as claimed in Claim 19, further characterised in that at least one of said ground engaging members includes steering means comprising means adapted to selectively vary the radial plane of the angle of tilt of the respective pad.

FIG.1

FIG.2

FIG.3

FIG.4

FIG.5

0049964

FIG.6

FIG.7

FIG.8